# EUROPÄISCHE PATENTSCHRIFT

(11) **EP 1 243 064 B1**
(45) Veröffentlichungstag und Bekanntmachung des Hinweises auf die Patenterteilung: **22.02.2006**
(21) Anmeldenummer: 00982813.8
(22) Anmeldetag: 21.12.2000
(51) Int. Cl.: H02K 15/12

(54) **VERFAHREN ZUR HERSTELLUNG EINER HOCHWERTIGEN ISOLIERUNG ELEKTRISCHER LEITER ODER LEITERBÜNDEL ROTIERENDER ELEKTRISCHER MASCHINEN MITTELS WIRBELSINTERN**
METHOD FOR PRODUCING A HIGH-QUALITY INSULATION OF ELECTRIC CONDUCTORS OR CONDUCTOR BUNDLES OF ROTATING ELECTRICAL MACHINES USING FLUIDIZED BED SINTERING
PROCEDE POUR REALISER UNE ISOLATION DE HAUTE QUALITE DE CONDUCTEURS ELECTRIQUES OU DE FAISCEAUX DE CONDUCTEURS DE MACHINES ELECTRIQUES ROTATIVES, PAR REVETEMENT EN LIT FLUIDISE

(30) Priorität: 28.12.1999 DE 19963376
(43) Veröffentlichungstag der Anmeldung: 25.09.2002
(73) Patentinhaber: Alstom Technology Ltd, 5400 Baden (CH)
(72) Erfinder: BAUMANN, Thomas, Dr., CH-5430 Wettingen (CH); NIENBURG, Johann, Dr., 69121 Heidelberg (DE); SOPKA, Jörg, Dr., 68723 Schwetzingen (DE)
(86) Internationale Anmeldenummer: PCT/CH2000/000682
(87) Internationale Veröffentlichungsnummer: WO 2001/048897

(56) Entgegenhaltungen:
- DE-A- 19 504 532
- US-A- 4 616 407
- US-A- 4 682 410

## Beschreibung

### Technisches Gebiet

Die Erfindung bezieht sich auf das Gebiet der Isolierung von rotierenden elektrischen Maschinen. Insbesondere betrifft die Erfindung ein Verfahren zur Herstellung einer hochwertigen Isolierung von Leitern oder Leiterbündeln, wie sie bei rotierenden Maschinen in Form von Statorspulen, Roebelstäben und Erregerleitern Verwendung finden.

### Stand der Technik

Herkömmlich werden auf dem Gebiet der Isolierung von Leitern oder Leiterbündeln von rotierenden elektrischen Maschinen verschiedene Verfahren verwendet.

Bei einem Verfahren werden Bänder bestehend aus einem Glasfaserträger und Glimmerpapier auf einen Statorleiter lagenförmig spiralig aufgewickelt, bis eine gewünschte Isolierdicke erreicht ist. Durch eine anschliessende lmprägnierung in Epoxyharz wird verbleibende Luft aus dem so entstandenen lsolierwickel verdrängt und die Bandlagen werden verklebt. Durch Aushärtung in einer geeigneten Form erhält die Isolierung ihre Endform. Herstellungsbedingt sind die Glimmerplättchen bei diesem Verfahren in Bandrichtung ausgerichtet, so dass daraus in der fertigen Isolierung eine Ausrichtung der Glimmerplättchen parallel zur Leiteroberfläche resultiert. Bei der sogenannten _{"}Resin rich"-Technik ist dem Band Epoxyharz im B-Zustand beigemischt, welches durch Heisspressen des Stabes verfestigt wird.

Gemäss eines weiteren aus der EP 0 660 336 A2 bekannten Verfahrens werden Statorleiter mit Bändern bestehend aus thermoplatischem Kunststoff, gefüllt mit Glimmer, bewickelt. Eine Verfestigung und Formung erfolgt hier durch Heisspressen des bewickelten Statorleiters, wobei es zu Luftverdrängung, Aufschmelzen des Thermoplastes und Verklebung der Wickellagen kommt. Auch bei diesem Verfahren sind die Glimmerplättchen parallel zur Leiteroberfläche ausgerichtet. Bei keinem der Verfahren erfolgt ein vollständiges Auspressen der Luft. Es bleiben luftgefüllte Spalten und Löcher übrig, in denen es bei Spannungsbelastung zu Teilentladungen im Bereich von nC und darüber kommt.

Schliesslich kann eine Isolierung des Statorleiters auch durch eine Extrusion mit Thermoplasten ohne Füllstoffe, d.h. auch ohne Glimmer, wie im US-Patent Nr. 5 650 031 beschrieben, erfolgen.

Nunmehr sind die zu isolierenden Leiter von rotierenden elektrischen Maschinen meist recht komplex geformte Gebilde in der Form von Stäben oder Spulen. Ein gerader Teil der Leiter befindet sich in den Nuten des Stators der Maschine. Dabei bildet ein gebogener Teil der Leiter nach entsprechender Verbindung mit benachbarten Stäben und Spulen einen Wickelkopf, der an beiden Enden aus dem Stator herausragt. Die Länge des geraden Teils kann bei grossen rotierenden Maschinen 6m überschreiten. Problematisch ist bisher, dass Isolierung und Leiter üblicherweise unterschiedliche thermische Ausdehnungskoeffizienten α aufweisen, die im Laufe der Zeit aufgrund von thermischen Spannungen zu Fehlstellen in der Isolierung durch Ablösungen der Isolierung entstehende Hohlräume führen können, und dass bei der Herstellung der Isolierung Fehlstellen, beispielsweise Lufteinschlüsse, entstehen. An derartigen Fehlstellen kann es zu Teilentladungen kommen, die zu einer Schädigung der Isolierung führen. Hierbei sind Teilentladungsaktivitäten im 100 nC-Bereich durchaus üblich.

Ein sicherer Betrieb der Maschinenisolierung ist angesichts dieser Teilentladungsaktivitäten bisher nur durch die Barrierewirkung von senkrecht zur Feldrichtung orientierten Glimmerplättchen möglich. Dadurch wird eine Ausbildung von Durchschlagskanälen aus den Hohlräumen heraus verhindert. Als Obergrenze der dauerhaft zulässigen Betriebsfeldstärke wird dabei allgemein 2,5 bis 2,75 kV/mm angesehen. Ein derartiger Maximalwert wird jedoch von anderen lsoliersystemen der Mittel- bzw. Hochspannungsisolierung zum Teil deutlich übertroffen.

So beträgt beispielsweise das Maximalfeld für einen Dauerbetrieb in Stützisolatoren, bei denen ein Aluminiumoxid-gefülltes Epoxydharz für gasisolierte Schaltungen verwendet wird, 4 kV/mm und dasjenige für Hochspannungskabel, bei denen Polyäthylen verwendet wird, ca. 12 kV/mm. Diesen herkömmlichen Isoliersystemen ist gemeinsam, dass sie unter Betriebsbelastung keine Teilentladung entwickeln.

Da die derzeit verwendeten herkömmlichen Verfahren und Materialien unter Verwendung von Glimmer im wesentlichen jedoch bereits mehr als 30 Jahre alt sind, sind durch eine Weiterentwicklung dieses Standes der Technik höchstens inkrementelle Verbesserungen zu erwarten. Daher erscheint es kaum möglich, durch Weiterentwicklungen dieses Standes der Technik eine höherwertige Isolierung zu entwickeln, die mit niedrigeren Durchlaufzeiten und geringeren Fertigungskosten im Vergleich zum Stand der Technik, sowie umweltschonend, d.h. ohne Lösungsmittel, ohne Emissionen und ohne eine Erzeugung von Sondermüll hergestellt werden kann und keine Fehlstellen enthält bzw. bei Fehlstellen zu keinen Teilentladungen führt.

### Darstellung der Erfindung

Daher ist es Aufgabe der vorliegenden Erfindung, ein Verfahren zur Herstellung einer hochwertigen Isolierung für Leiter oder Leiterbündel zu schaffen, bei denen die Isolierung eine hohe Qualität aufweist, mit geringen Durchlaufzeiten und geringen Fertigungskosten sowie umweltschonend herstellbar ist.

Erfindungsgemäss wird diese Aufgabe durch das Verfahren zur Herstellung einer hochwertigen Isolierung von Leitern oder Leiterbündeln mit den Merkmalen des Patentanspruchs 1 gelöst. In den Unteransprüchen sind vorteilhafte Weiterbildungen der Erfindung angegeben.

Durch dieses erfindungsgemässe Verfahren zur Herstellung einer hochwertigen Isolierung von Leitern oder Leiterbündeln ohne Hohlräume, die unter Prüf- und Betriebsbelastungen zur Teilentladungen führen können, werden die ausgerichteten Glimmerplättchen nicht mehr benötigt. Dadurch wird sowohl die Wahl der Herstellungsverfahren als auch die der Materialien für die Isolierung sehr erleichtert, da das Einarbeiten von Glimmer in Konzentrationen von mehr als 40 Gewichtsprozent bei vielen Polymeren problematisch ist.

### Kurze Beschreibung der Zeichnung

Nachfolgend wird die Erfindung anhand von in der Zeichnung dargestellten bevorzugten Ausführungsbeispielen näher erläutert.

Es zeigen:
Fig. 1 wesentliche Verfahrensschritte des erfindungsgemässen Verfahrens gemäss einem ersten Ausführungsbeispiel,
Fig. 2 wesentlichen Verfahrensschritte des erfindungsgemässen Verfahrens gemäss einem zweiten Ausführungsbeispiel und

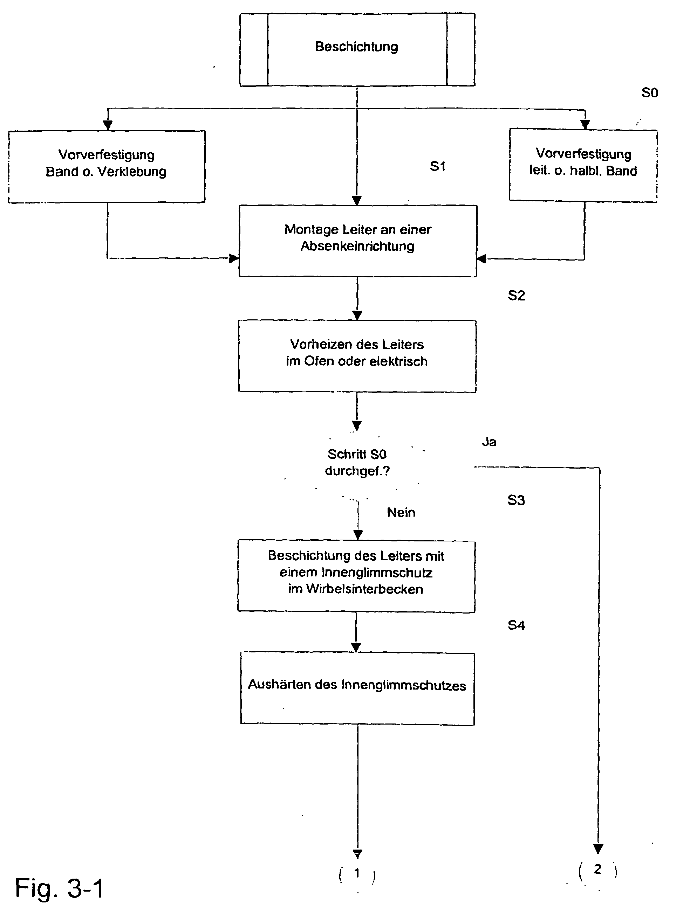

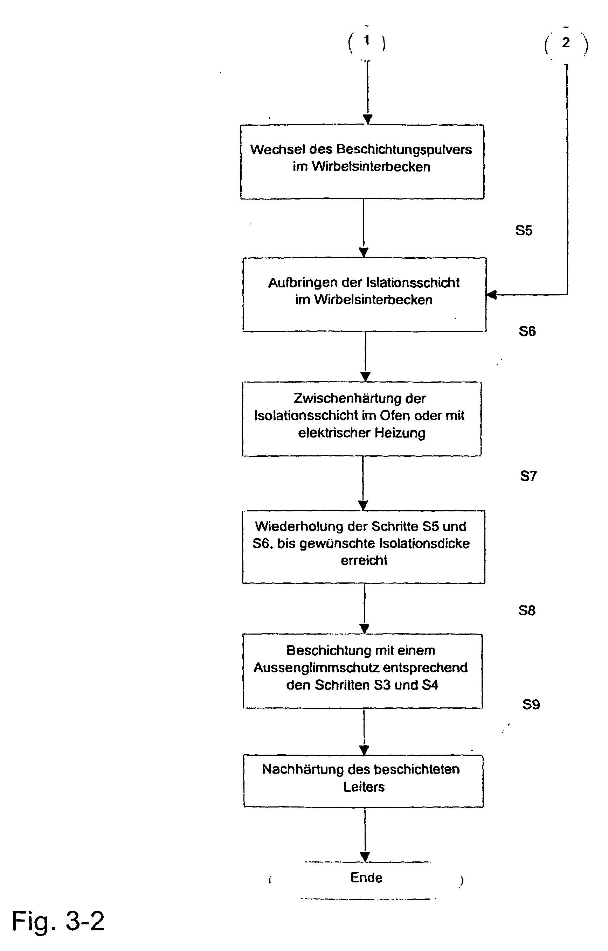

Fig. 3 ein Ablaufdiagramm des erfindungsgemässen Verfahrens.

### Weg(e) zur Ausführung der Erfindung

Im folgenden wird nun ein Verfahren zur Herstellung einer hochwertigen Isolierung für Leiter oder Leiterbündel von rotierenden elektrischen Maschinen ausführlich beschrieben. Zuerst wird dabei auf den grundsätzlichen Aufbau der Isolierung eingegangen und anschliessend das erfindungsgemässe Verfahren genau erläutert.

Die mit dem erfindungsgemässen Verfahren aufgebrachte Isolierung besteht aus drei Schichten. Die erste Schicht bildet einen Innenglimmschutz, bestehend aus leitfähig oder halbleitfähig gefülltem Polymer. Hierbei wird ein Polymer verwendet, das sich gut mit dem Polymerwerkstoff der darüber folgenden Isolierschicht verbindet. Vorzugsweise wird dasselbe Polymer verwendet, wie in der Isolierschicht.

Der Innenglimmschutz hat - wie bei Hochspannungskabeln - die Aufgabe, elektrische und mechanische Grenzschichten zu entkoppeln. Elektrisch weist der Innenglimmschutz dasselbe Potential wie der darunterliegende metallische Leiter auf, ist also Teil des elektrischen Leiters; mechanisch ist er hingegen Teil der Isolierung. Dadurch ist gewährleistet, dass etwaige Ablösungen zwischen Isolierhülse und Leiter aufgrund von thermischem Wechselspiel teilentladungsfrei sind, da über die Ablösung keine Spannung abfällt.

Das erfindungsgemässe Verfahren zur Herstellung dieser hochwertigen Isolierung für Leiter und Leiterbündel soll die folgenden Anforderungen erfüllen:
1) Einerseits soll das Herstellungsverfahren weitgehend unabhängig von der jeweiligen Geometrie des Grünstabes bzw. der Grünspule, d.h. des verroebelten, nichtisolierten, verfestigten Stabes oder der Spule, sein.
2) Dabei soll die Isolierung hochwertig sein, d.h. gegenüber dem Stand der Technik eine bessere thermische Festigkeit bis ca. Tₘₐₓ = 180°C aufweisen und ein Maximalfeld für Dauerbetrieb von ca. 5kV/mm schadlos überstehen.
3) Darüber hinaus soll das Verfahren die Herstellung einer Isolierung konstanter Dicke mit einer Toleranz Δd/d < 10% - auch wenn die Toleranzen des Grünstabes bzw. der Grünspule deutlich grösser sind - ermöglichen, wobei Schichtdicken von 0,3 bis 5 mm herstellbar sein sollen.
4) Zur Verkürzung der Herstellungszeit soll die Durchlaufzeit pro Stab bzw. Spule maximal 1 bis 3 Stunden betragen.

Aufgrund dieser durch das erfindungsgemässe Verfahren zu erfüllenden Anforderungen könnte man erwägen, herkömmliche Wirbelsinter-Verfahren als Ausgangspunkt zu verwenden.

Ein derartiges herkömmliches Wirbelsinter-Verfahren ist beispielsweise im US-Patent Nr. 4 806 388 mit dem Titel _{"}Method and Apparatus for Coating Metal Part with Synthetic Resin" beschrieben ist. Bei dem dort offenbarten Verfahren wird eine synthetische Harzschicht auf eine Oberfläche eines Metallteils aufgebracht, während der Metallteil sich innerhalb einer pulverförmigen Masse aus einem thermisch schmelzbaren synthetischen Harz befindet. Als Harz wird ein synthetisches Harz aus Copolymer von Tetrafluoroethylen und Ethylen (Markenname AFLON®) verwendet, da dieses den gewünschten engen Bereich zwischen Schmelztemperaturbereich und Zersetzungstemperaturbereich bietet. Dieses Beschichtungsmaterial besitzt mit 260°C einen recht hohen Schmelzpunkt und seine Zersetzungstemperatur liegt bei 360°C; daher erfolgt während des Beschichtungsvorgangs eine Erwärmung des zu beschichtenden Teils auf einen Bereich zwischen 300°C und 340°C. Bei diesem Verfahren wird der vorerhitzte Metallteil in eine pulverförmige Beschichtungsmasse eingebracht. Anschliessend wird der Metallteil mittels einer Induktionsheizung auf eine Temperatur oberhalb eines Schmelzpunkts und zugleich unterhalb eines thermischen Zersetzungspunktes des synthetischen Harzes erhitzt. Dadurch schmilzt ein Teil der das erhitzte Metall umgebenden pulverförmigen Masse und der geschmolzene Teil lagert sich als synthetische Harzschicht auf der Oberfläche des erhitzten Metalls ab. Weiterhin wird bei diesem Verfahren Luft in die pulverförmige Masse geblasen, um sie in einem flüssigen Zustand zu halten. Nach der Beschichtung wird der Metallteil aus der pulverförmigen Masse entfernt. Durch die Induktionsheizung ist die gewünschte Beschichtungsdicke im Gegensatz zu anderen Wirbelsinterverfahren in einem Durchgang erzielbar, Dickenschwankungen sind minimal, da die Metalltemperatur über die Induktionsheizung einfach steuerbar ist. Verwendung findet diese herkömmliche Wirbelsinterbeschichtung beispielsweise bei der Herstellung eines harzbeschichteten Rotors eines Kompressors für ein Kraftfahrzeug.

Wirbelsintern, wie beispielsweise das vorstehend beschriebene Verfahren, erfordert somit einen wesentlich geringeren Aufwand an Fertigungstechnologie als das heutige lsolierverfahren. Teuere Spezialgeräte wie Wickelroboter, Vakuum-Druck-Behälter, Einrichtungen zur gekühlten Flüssigharz-Speicherung, usw. fallen weg. Sie werden durch Wirbelsinterbecken geeigneter Grösse ersetzt. Damit sind eine wesentliche Einsparung von Investitionsgütern, verringerte Durchlaufzeiten, von beispielsweise ca. 2h für einen grossen Roebelstab, sowie ein hoher Grad an Automatisierung erzielbar.

Herkömmlich wird das Wirbelsintern in der Elektrotechnik jedoch hauptsächlich für Drahtisolierungen und zum Versiegeln von kleineren Motor-Statoren und -Rotoren sowie zur Metallbeschichtung an sich verwendet. In beiden Fällen sind im Gegensatz zu den durch die vorliegende Erfindung gestellten Anforderungen die lsolierdicke, die sich im Bereich weniger Zehntel mm oder darunter bewegt, und die elektrische Beanspruchung gering.

Daher ist es bei dem erfindungsgemässen Verfahren erforderlich, das herkömmliche Verfahren und die dabei verwendeten Materialien derart abzuwandeln, dass eine grössere lsolierdicke sowie eine erhöhte Teilentladungsfestigkeit erreicht werden kann. Zudem sollte das Verfahren einfach und energiesparend anwendbar sein.

Daher ist das herkömmliche Verfahren unter anderem dahingehend zu modifizieren, dass zur Herstellung einer fehlerfreien Beschichtung keine Spezialmaterialien sowie keine äusserst hohen Heiztemperaturen erforderlich sind, da dies beides zu einem erhöhten Produktions- und Energieaufwand führt.

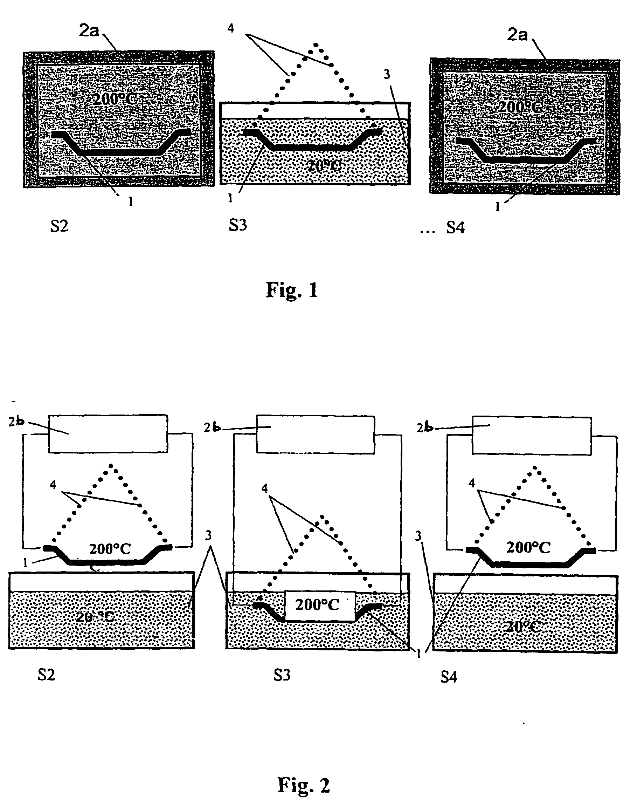

Das erfindungsgemässe Verfahren kann auf zwei alternative Weisen realisiert werden, wie in Fig. 1 und 2 gezeigt. In beiden Ausführungen wird ein Roebelstab bzw. eine Spule 1 vor Beginn der Beschichtung vorgeheizt. Die Temperatur, auf die vorgeheizt wird, ist durch die Schmelz- und Vernetzungstemperatur des Beschichtungspulvers vorgegeben; im in der Figur 1 gezeigten Fall beträgt sie beispielsweise 200°C und liegt damit ca. 20°C über der gewünschten Beschichtungstemperatur. Diese ca. 20°C höhere Temperatur ist erforderlich, um Temperaturverluste beim Transport von einem Ofen bzw. einer Aufheizposition ausserhalb der Beschichtungseinrichtung zur Beschichtungseinrichtung auszugleichen. Bei den alternativen Ausführungen liegt der wesentliche Unterschied in der Art der zum Vorheizen des Stabes bzw. der Spule 1 verwendeten Heizung. Im Fall gemäss Fig. 1 wird eine Ofenheizung 2a verwendet, während im Fall gemäss Fig. 2 eine elektrische Heizung 2b realisiert ist, die direkt an dem Stab bzw. der Spule 1 angeschlossen ist. Diese elektrische Heizung 2b kann entweder als induktive Heizung durch um den Leiter angeordnete Mittel- oder Hochfrequenzspulen, oder als resistive Heizung durch Anschliessen des Stabes bzw. der Spule an eine Gleichspannung oder Niederspannung realisiert werden.

Eine weitere spezielle Ausführungsform beinhaltet zudem eine elektrostatische Aufladung des Beschichtungspulvers. Auf diese Art und Weise kann eine bessere Haftung des Beschichtungspulvers am Stab bzw. der Spule, vor allem im Kantenbereich erreicht werden. Insbesondere wird auf diese Weise in den Kantenbereichen eine erhöhte lsolierdicke erreicht.

Der lsolierungsaufbau erfolgt beim erfindungsgemässen Verfahren lagenweise. Zur Beschichtung wird der vorgeheizte Stab bzw. die Spule 1, der bzw. die an einer Absenkeinrichtung 4 befestigt ist, in ein Wirbelbecken 3 getaucht. Dabei sind Durchmesser und die Tiefe des Wirbelbeckens 3 bevorzugterweise so gewählt, dass der Stab bzw. die Spule beim Tauchen mindestens 50 mm Abstand zu den Wirbelbeckenwänden hat und vollständig eingetaucht werden kann. Die Lagendicke der Beschichtung wird durch die Verweildauer des Stabs bzw. der Spule 1 im Wirbelbecken 3 gesteuert. Zur Verhinderung von Blaseneinschlüssen, die Fehlstellen darstellen würden, an denen Teilentladungen auftreten könnten, jedoch ohne Verwendung eines Spezialbeschichtungsmaterials sowie höherer Herstellungstemperaturen ist die Eintauchzeit so zu wählen, dass die pro Tauchdurchgang erzielte Lagendicke 0,2 mm nicht übersteigt, bevorzugterweise ca. 0,1 mm beträgt, was einer Eintauchzeit von ca. 1 bis 5 Sekunden entspricht. Zur Homogenisierung des Pulvers im Wirbelsinterbecken 3, welche die Gleichmässigkeit der Beschichtung fördert, kann im Wirbelbecken 3 zusätzlich gerührt, vibriert oder Ultraschall eingeleitet werden.

Als weitere Massnahme kann das Wirbelbecken 3 mit (nicht gezeigten) Hochspannungselektroden ausgerüstet sein, welche die Pulverpartikel elektrostatisch aufladen. Eine Aufladung des Pulvers ist zwar für das erfindungsgemässe Verfahren nicht zwingend erforderlich, hat aber den Vorteil, dass an Spitzen und Kanten des zu isolierenden Stabes bzw. der Spule aufgrund einer lokalen Überhöhung des elektrischen Feldes ein erhöhter Materialauftrag stattfindet. Dies ist deshalb erwünscht, da an diesen Stellen auch im Betrieb die Feldstärke überhöht ist und erfahrungsgemäss Isolierungen bevorzugt dort durchbrechen.

Nach dem Tauchvorgang ist dem Pulver genügend Zeit zu geben, um komplett aufzuschmelzen, zu verlaufen und soweit zu vernetzen, dass es nicht mehr fliesst. Daher ist die später noch erläuterte Gelzeit des Pulvers von Bedeutung.

Beim Tauchvorgang werden die Stabösen der Roebelstäbe als Aufhängungspunkte verwendet. Zusätzliche Aufhängungen oder Unterstützungen des Stabes sind mit dem Wirbelsinterverfahren nicht realisierbar, da an diesen Stellen keine Beschichtung erfolgen würde. Somit ist das Wirbelsinterverfahren auf vergleichsweise kurze Stäbe mit einer Länge von bis zu ca. 3 m beschränkt, da grössere Stäbe zu stark durchhängen würden. Dies beeinträchtigt die Anwendung des Verfahrens insbesondere für die Isolierung von Roebelstäben eines Turbogenerators, die Stablängen von bis zu 10 m aufweisen. Motoren hingegen sind wesentlich kürzer, so dass das erfindungsgemässe Verfahren für alle heutigen Standardmotoren anwendbar sein sollte. Die Motorspulen werden dabei beim Beschichten in den Spulenaugen gehaltert, die frei von Isolierung bleiben. Das die Spulenaugen frei von Isolierung bleiben ist gewollt, da ansonsten die erforderliche Verformbarkeit der Spule für den Einbau in den Stator nicht mehr gewährleistet wäre.

In einer weiteren speziellen Ausführungsform der Erfindung wird das erfindungsgemässe Wirbelsinterverfahren auch verwendet, um zusätzlich nach einer Isolierung und vollständigen Montage der Motorspulen im Stator die bisher freien Spulenaugen zu isolieren. Hierzu wird der Motorstator senkrecht gestellt und die Spulen werden elektrisch beheizt. Dann werden die Spulenaugen des unteren Spulenendes durch Eintauchen der Spulenenden in ein Wirbelsinterbecken beschichtet. Anschliessend wird der Stator um 180° gedreht und die Spulenaugen des anderen Statorendes werden beschichtet.

Als Materialien für die Isolierung sind prinzipiell alle thermisch vernetzbaren Kunststoffe, sogenannte Thermosets einsetzbar. Die bei der vorliegenden Anwendung geforderte thermische Eignung der Isolierung bis 180°C wird am besten durch Epoxyde erfüllt. Diese Materialien bestehen aus einer Mischung aus mindestens einem nichtvernetzten Harz und mindestens einem Härter (plus einige weitere Zusätze wie Beschleuniger, Pigmente usw.) sowie aus anorganischen Füllstoffen. Die Mischung ist bis mindestens 50°C fest. Je nach chemischer Zusammensetzung von Harz und Härter variieren Schmelz- und Härtungstemperaturen sowie die Glasübergangstemperatur T_{g}. Der Temperaturverlauf der mechanischen und dielektrischen Festigkeit ist eng mit der Glasübergangstemperatur T_{g} verknüpft. Wird eine Einsetzbarkeit der Isolierung bei Wärmeklasse H gewünscht, sollte T_{g} in diesem Bereich liegen, bevorzugt zwischen 150°C und 200°C. Glasübergangstemperaturen deutlich höher als 200°C sind einerseits schwer zu realisieren und führen andererseits zu einem Material, das im Bereich der Raumtemperatur recht spröde ist. Für das Wirbelsintern konfektionierte Klasse-H spezifizierte Pulver auf Epoxy-Basis, sowohl gefüllt als auch ungefüllt, sind im Handel erhältlich.

Die oben erwähnte, erwünschte Blasenfreiheit ist nicht nur abhängig von Prozessparametern, wie der Auftragsdicke, sondern auch von Materialeigenschaften.

Wichtig ist, dass das Epoxy im flüssigen Zustand eine hinreichend niedrige Viskosität hat, um gut zu verlaufen, und dass die Gelzeit lang genug ist, dass alle blasenbildenden Verunreinigungen verdampft sind. Diese Forderung nach langen Gelzeiten ist dem herkömmlichen Trend der Pulverlackierer entgegengesetzt, die zur Erzielung hoher Durchlaufzeiten beim Dünnschicht-Lackieren die Gelzeiten durch Zugabe von Beschleunigern gezielt niedrig einstellen, beispielsweise typischerweise auf 15s. Durch Verringerung des Beschleunigeranteils lassen sich jedoch die Gelzeiten handelsüblicher Pulver ohne Schwierigkeiten auf Zeiten ≥ 40s bringen, die für die vorliegende Anwendung ausreichend lang sind.

Die Viskosität wird bei Beschichtungspulvern meist nicht als separate Grösse gemessen und spezifiziert; stattdessen wird der sogenannte Ablauf, der sich aus Viskosität und Gelzeit ergibt, spezifiziert. Blasenfreie Schichten werden erzielt, wenn der Ablauf > 30 mm ist.

Die Füllung mit anorganischen Füllstoffen ist prinzipiell wünschenswert zur Preisreduktion, Verbesserung der Kriechbeständigkeit, zur Verringerung des thermischen Ausdehnungskoeffizienten und zur Verbesserung der Wärmeleitung der Isolierung. Der Füllstoffanteil an der Gesamtmischung sollte 5―50 Gewichtsprozent betragen, bezogen auf eine geschlossene Dichte der Füllstoffe von bis zu 4 g/cm³. Gebräuchliche Füllmittel sind beispielsweise Quarzmehl, Wollastonit, Talk und Kreidemehl mit Korngrössen um 10 µm (mittlere Korngrösse d₅₀). Zur Herstellung eines Sprühpulvers wird der Füller zusammen mit Harz, Härter und weiteren Zusatzstoffen gemischt und kompoundiert. Das kompoundierte Produkt wird anschliessend zu Pulver zermahlen.

Diese Mahlprozesse werden üblicherweise in Geräten aus Stahl oder Hartmetall (Mohs'scher Härtegrad 5 bis 6) durchgeführt. Die Verwendung harter Füllstoffe, z.B. Quarzmehl (Härtegrad 7), führt zu metallischem Abrieb, bevorzugt in Form von Spänen im sub-mm Bereich. Diese werden in die Isolierung eingebaut und führen aufgrund ihrer nadelähnlichen Geometrie zu Stellen mit einer lokal sehr stark überhöhten elektrischen Feldstärke, von denen erfahrungsgemäss ein elektrischer Durchschlag erfolgen kann. Vermieden wird der Abrieb durch Verwendung von _{"}weichen" Füllern (Mohs'scher Härtegrad ≤ 4), z.B. Kreidemehl und/oder Verwendung von feineren Füllstoffen mit d₅₀<<1 µm, z.B. Ton, SiO₂, ZnO oder TiO₂.

Derartige Feinfüller haben darüber hinaus den Vorteil, dass sie selbst bei Vorliegen von Fehlstellen wie Hohlräumen oder metallischen Einschlüssen den elektrischen Durchbruch verhindern oder zumindest sehr stark verzögern, wie beispielsweise im US-Patent Nr. 4 760 296 von Johnston et al. oder in der deutschen Patentanmeldung DE 40 37 972 A1 offenbart. In diesen beiden Veröffentlichungen wird die Lebensdauer-erhöhende Wirkung durch gänzliches oder teilweises Ersetzen des Grobfüllers durch Füller mit Korngrössen im Nanometer-bereich (0,005 bis 0,1 µm maximale Korngrösse) erzielt. Nano-füller haben jedoch die unangenehme Begleiteigenschaft, die Schmelzezähigkeit der Pulvermischung stark zu erhöhen, der sogenannte Tixotropie-Effekt. Dies stört sowohl bei der Herstellung des Pulvers als auch bei seiner Verarbeitung. Dennoch stellen Nano-Füller aber eine brauchbare Alternative zur Lebensdauer-Erhöhung dar. Für die erfindungsgemässe Anwendung hat sich jedoch auch gezeigt, dass eine alternative Verwendung von TiO₂-Pulver mit mittleren Korngrössen von ca. 0,2 µm als vollständiger öder teilweiser Ersatz für Grobfüller nicht zu einer nachteiligen Erhöhung der Schmelzeviskosität führt und trotzdem ebenfalls die Lebenszeit-erhöhenden Wirkungen in der Art von Nano-Füllern besitzt. Der Anteil von TiO₂-Pulver an der Gesamtmischung sollte dabei mindestens 3%, vorzugsweise mindestens 5% betragen.

Leitfähige Schichten, die für Innenglimmschutz und Aussenglimmschutz eingesetzt werden, lassen sich durch Verwendung von leitenden Füllstoffen, wie beispielsweise Graphit, Russ und/oder Metallpulver, herstellen.

Im folgenden wird nun das erfindungsgemässe Verfahren zur Isolierung von elektrischen Leitern oder Leiterbündeln genauer beschrieben.

Das Verfahren umfasst dabei die folgenden Schritte:

### 1) Stab- bzw. Spulen-Montage an einer Absenkeinrichtung

Zu Beginn des Beschichtungsverfahrens wird zunächst in einem ersten Schritt S1 der Stab bzw. die Spule an einer Absenkeinrichtung befestigt. Als Halterungspunkte für die Befestigung an der Absenkeinrichtung werden die Stabenden im Falle eines Stabes bzw. die Spulenaugen im Falle einer Spule verwendet. Für eine zuverlässige und stabile Halterung des Stabes bzw. der Spule an der Absenkeinrichtung ist es vorteilhaft, wenn der Stab bzw. die Spule vor Beginn der Beschichtung durch innere Verklebungen der Leiter oder Umwicklung mit einem Band vorverfestigt wird (Schritt SO).

### 2) Vorheizen des Stabs bzw. der Spule

Darauffolgend wird in Schritt S2 der Stab bzw. die Spule vorgeheizt. Hierbei gibt es zwei alternative Heizverfahren. Entweder wird in einem Schritt 2a der Stab bzw. die Spule in einen Ofen eingefahren und dort auf die vorbestimmte Beschichtungstemperatur vorgeheizt, oder es wird in einem Schritt 2b der Stab bzw. die Spule an eine elektrische Heizung angeschlossen, die den Stab bzw. die Spule auf die gewünschte Substrattemperatur erwärmt.

### 3) Beschichtung des Stabs bzw. der Spule mit einem Innenglimmschutz im Wirbelsinterbad

In einem dritten Schritt S3 wird der vorgeheizte Stab bzw. die Spule, der bzw. die an der Absenkeinrichtung befestigt ist, mit Hilfe der Absenkeinrichtung in ein Wirbelsinterbecken 3 abgesenkt, das mit Beschichtungspulver gefüllt ist. Dieses Wirbelsinterbecken 3 ist beispielsweise ein Becken, das ausreichend gross ist, um den zu beschichtenden Stab bzw. die Spule aufzunehmen und ein Beschichtungspulver enthält. Dieses Beschichtungspulver, das einen Innenglimmschutz ausbilden soll, ist entweder ein leitfähiges oder ein halbleitfähiges Epoxy. Auf dem erwärmten Substrat schmilzt eine Schicht aus Epoxypulver auf und bildet einen geschlossenen flüssigen Film. Die Filmdicke des Innenglimmschutzes wird hierbei über die Verweildauer im Becken geregelt.

### 4) Aushärten des Innenglimmschutzes auf dem Stab bzw. der Spule

Sobald eine gewünschte Beschichtungsdicke des Innenglimmschutzes, beispielsweise ca. 0,1 mm, erreicht ist, hebt in einem Schritt S4 die Absenkeinrichtung den Stab bzw. die Spule aus dem Becken. Dann wird der Stab bzw. die Spule wiederum für ca. 2 min. erwärmt, wiederum entweder mittels eines Ofens oder mittels einer elektrischen Heizung, um ein Gelieren der flüssigen Isolierlage zu verursachen.

Die vorstehend geschilderten Schritte S3 und S4 zum Aufbringen eines Innenglimmschutzes sind jedoch nur erforderlich, wenn in Schritt S0 kein mit einer leitfähigen oder halbleitfähigen Schicht versehenes Band für die Vorverfestigung des Stabs bzw. der Spule verwendet wurde.

### 5) Aufbringen der Isolierschicht auf den Stab bzw. die Spule

Im darauffolgenden Schritt S5 wird die eigentliche Isolierung auf den Stab bzw. die Spule aufgebracht. Dazu wird der Stab bzw. die Spule an der Absenkeinrichtung wiederum in das Wirbelsinterbecken 3 abgesenkt. In diesem Fall befindet sich in dem Wirbelsinterbecken 3 ein isolierendes Pulver. Hierbei schmilzt das isolierende Pulver auf der Oberfläche des vorgewärmten Stabs bzw. der Spule auf und bildet einen geschlossenen flüssigen Film. In dieses Wirbelsinterbecken 3 wird der Stab bzw. die Spule eingetaucht gehalten, bis eine gewünschte Lagendicke pro Tauchdurchgang ≤ 0,2 mm, vorzugsweise 0,1 mm, erreicht ist, d.h. ca. 1 bis 6 s.

### 6) Zwischenhärtung der Isolierung des Stabs bzw. der Spule

Anschliessend erfolgt in Schritt S6 eine ca. 2 bis 10 minütige Zwischenhärtung der Isolierung, um möglichen im aufgeschmolzenen isolierenden Pulver enthaltenen flüchtigen Komponenten Zeit zum Entweichen zu geben. Eventuell ist dabei aufgrund der entstehenden Beschichtungsdicke eine Nachregelung der Substrattemperatur, d.h. der Temperatur des Stabs bzw. der Spule erforderlich. Die Überwachung der Oberflächentemperatur, anhand derer festgestellt wird, wann die Substrattemperatur nachgeregelt werden muss erfolgt hier berührungslos. Beispielsweise erfolgt eine derartige berührungslose Messung mittels eines IR-Pyrometers während der Zeit, in der der Stab bzw. die Spule sich ausserhalb des Wirbelsinterbekkens bzw. Bades befindet.

### 7) Wiederholung der Beschichtungsschritte S5 und S6

Da in einem Beschichtungsschritt S5 und S6 in der Regel eine gewünschte lsolierdicke nicht erreicht werden kann, werden nun in Schritt S7 die Beschichtungsschritte zum Aufbringen der Isolierschicht auf den Stab bzw. die Spule so lange wiederholt, bis die gewünschte Isolierdicke erreicht ist.

### 8) Beschichtung des Stabs bzw. der Spule mit einem Aussenglimmschutz

Folgend auf die Beschichtung mit der Isolierschicht wird nun, sobald eine Beschichtungsdicke einer Isolierschicht als der gewünschten lsolierdicke entsprechend erfasst wird, in Schritt S8 als letzte Beschichtung dieses Stabs bzw. der Spule ein Aussenglimmschutz aufgebracht. Dieser Aussenglimmschutz besteht aus einem leitfähigen Epoxy, das ebenfalls in Form eines Pulvers im Wirbelsinterbad enthalten ist. Die einzelnen Verfahrensschritte bei der Aufbringung dieses Aussenglimmschutzes entsprechend den bereits für das Aufbringen des Innenglimmschutzes beschriebenen Schritten S3 und S4.

### 9) Nachhärtung des Stabs bzw. der Spule

Als abschliessender Schritt S9 bei der Beschichtung des Stabs bzw. der Spule wird die Beschichtung, um ihre Festigkeit zu erhöhen entweder in einem Ofen oder mittels elektrischer Heizung ca. 20 bis 60 min. lang ausgehärtet.

Somit offenbart die Erfindung ein Verfahren mit dem auf einfache Weise und kostengünstig, ohne das spezieller Einrichtungen erforderlich sind, eine Fehlstellen-freie Isolierung von Leitern oder Leiterbündeln hergestellt werden kann.

Zusammenfassend offenbart die Erfindung ein Verfahren zur Herstellung einer hochwertigen Isolierung auf einem Leiter oder Leiterbündel von rotierenden elektrischen Maschinen, bei dem in aufeinanderfolgenden Tauchdurchgängen in einem Wirbelsinterbecken Innenglimmschutz, Isolierung und Aussenglimmschutz mit jeweiligen Lagendicken von ≤0,2 mm aufgebracht werden. Das Sintern sowie die Aushärtung erfolgen mit Temperaturen von ca. 200°C, so dass Materialien verwendet werden können, welche die an die Isolierung derartiger Leiter oder Leiterbündel von rotierenden elektrischen Maschinen gestellten Anforderungen erfüllt werden. Darüber hinaus ist durch das Herstellungsverfahren, insbesondere durch die gewählte Schichtdicke der Einzellagen eine Fehlerfreiheit der Einzellagen gewährleistet, so dass keine Teilentladungen auftreten können, die ansonsten zu einer Beschädigung der Isolierung führen würden.

## Patentansprüche

1. Verfahren zur Herstellung einer hochwertigen Isolierung von Leitern oder Leiterbündeln rotierender elektrischer Maschinen, mit den Schritten:
(S1) Montage eines zu beschichtenden Leiters oder Leiterbündels auf einer Absenkeinrichtung,
(S2) Vorheizen des Leiters oder Leiterbündels auf eine vorbestimmte Substrattemperatur,
(S3) Beschichten des Leiters oder Leiterbündels mit einem Innenglimmschutz durch Absenken mittels der Absenkvorrichtung in ein Wirbelsinterbecken mit einem ersten Beschichtungspulver bis eine Schichtdicke ≤0,2mm erreicht ist,
(S4) Heben des Leiters oder Leiterbündels mittels der Absenkeinrichtung aus dem Wirbelsinterbecken, sobald eine gewünschte Beschichtungsdicke erreicht ist, und Aushärten des Innenglimmschutzes durch Erwärmung.
(S5) Beschichten des Leiters oder Leiterbündels mit einer Isolierschicht durch Absenken mittels der Absenkvorrichtung in das Wirbelsinterbecken mit einem zweiten Beschichtungspulver, bis eine Schichtdicke ≤0,2 mm erreicht ist,
(S6) Zwischenhärten der Isolierschicht des Leiters oder Leiterbündels durch Erwärmung nach einem Heben des Leiters oder Leiterbündels aus dem Wirbelsinterbecken,
(S7) Wiederholen der Beschichtungsschritte S5 und S6, bis eine gewünschte lsolierschichtdicke bestehend aus mehreren Isolierschichtlagen aufgebracht ist,
(S8) Beschichten des Leiters oder Leiterbündels mit einem Aussenglimmschutz entsprechend den Schritten S5 und S6, wobei im Wirbelsinterbekken ein drittes Beschichtungsmaterial enthalten ist, und
(S9) Aushärten der gesamten Isolierung des Leiters oder Leiterbündels durch Erwärmen.

2. Verfahren nach Anspruch 1, wobei
der Leiter oder das Leiterbündel beispielsweise ein Leiterstab, ein Roebelstab oder eine Spule sein können.

3. Verfahren nach Anspruch 1 oder 2, mit dem weiteren Schritt (S0) vor Beginn der Beschichtung des Leiters oder Leiterbündels inneres Verkleben der Leiter oder Umwickeln mit einem Band zur Vorverfestigung,

4. Verfahren nach Anspruch 3, wobei,
wenn in Schritt (S0) ein Band mit einer halbleitfähigen oder leitfähigen Schicht zum Umwickeln verwendet wird, das zugleich einen Innenglimmschutz bildet, die Schritte S3 und S4 zum Aufbringen des Innenglimmschutzes nicht erforderlich sind.

5. Verfahren nach einem der vorangehenden Ansprüche 1 bis 4, wobei
in Schritt (S2) das Substrat auf ca. 20°C über der Schmelztemperatur des Beschichtungspulvers erhitzt wird.

6. Verfahren nach einem der vorangehenden Ansprüche 1 bis 5, wobei
in Schritt (S2) das Erhitzen entweder in einem Ofen erfolgt oder durch elektrisches Heizen des Leiters oder Leiterbündels.

7. Verfahren nach Anspruch 6, wobei
in Schritt (S2) das elektrische Heizen durch Ohm'sches Heizen unter Verwendung von Gleichstrom oder Niederfrequenz erfolgt.

8. Verfahren nach einem der vorangehenden Ansprüche 1 bis 7, wobei
als erstes Beschichtungspulver leitfähiger oder halbleitfähiger thermisch vernetzbarer Kunststoff, als zweites Beschichtungspulver ein isolierendes Pulver und als drittes Beschichtungspulver ein leitfähiger thermisch vernetzbarer Kunststoff verwendet wird.

9. Verfahren nach Anspruch 8, wobei
als leitfähiger oder halbleitfähiger thermisch vernetzbarer Kunststoff ein Epoxidharz im B-Zustand verwendet wird.

10. Verfahren nach einem der vorangehenden Ansprüche 1 bis 9, wobei
in Schritt S3 ein Aufschmelzen des Beschichtungspulvers auf dem erwärmten Leiter bzw. Leiterbündel erfolgt und die aufgebrachte Schichtdikke über die Verweildauer im Wirbelsinterbecken und die Temperatur des Werkstückes geregelt wird.

11. Verfahren nach Anspruch 10, wobei
die Verweildauer im Wirbelsinterbecken mittels einer Steuereinrichtung eines Beschichtungsroboters geregelt wird.

12. Verfahren nach einem der vorangehenden Ansprüche 1 bis 11, wobei Schritt (S6) ein Erfassen einer Oberflächentemperatur des zu beschichtenden Leiters oder Leiterbündels mittels einer Messeinrichtung umfasst und die Substrattemperatur nachgeregelt wird, wenn die erfasste Oberflächentemperatur unter die vorbestimmte Substrattemperatur absinkt.

13. Verfahren nach einem der vorangehenden Ansprüche 1 bis 12, wobei
in Schritt (S9) das Erwärmen entweder mittels eines Ofens oder mittels elektrischen Heizens erfolgt.

14. Verfahren nach Anspruch 2, wobei
Schritt (S1) ein Haltern des Stabes an den Stabenden oder der Spulen an den Spulenaugen umfasst.

15. Verfahren nach Anspruch 2 oder 14, mit dem weiteren Schritt (S10) im Falle einer Spule nach dem Einbau der Spule Senkrechtstellen des Motorstators, elektrisches Heizen der Spule und Eintauchen der Spulenaugen das Wirbelsinterbecken zum Beschichten mit Epoxy jeweils für beide Spulenseiten oder
im Falle eines Stabes resistives Heizen der Motorwicklung und Isolieren der Endpartien durch Sprühsintern für beide Stabenden.

16. Verfahren nach einem der Ansprüche 1 bis 15, mit dem weiteren Schritt Elektrostatisches Aufladen des Beschichtungspulvers, so dass an Spitzen und Kanten des zu beschichtenden Leiters oder Leiterbündels ein erhöhter Materialauftrag stattfindet.

17. Verfahren nach Anspruch 16, wobei
im Schritt des elektrostatischen Aufladens des Beschichtungspulvers das elektrostatische Aufladen mittels von am Wirbelsinterbecken vorgesehenen Hochspannungselektroden erfolgt.

## Claims

1. Process for producing a high-quality insulation for conductors or conductor bundles of rotating electrical machines, comprising the steps of:
(S1) mounting a conductor or conductor bundle which is to be coated on a lowering device,
(S2) preheating the conductor or conductor bundle to a predetermined substrate temperature,
(S3) coating the conductor or conductor bundle with an internal corona-discharge protection by lowering it, by means of the lowering device, into a fluidized-bed sintering tank holding a first coating powder until a layer thickness of ≤ 0.2 mm is reached,
(S4) lifting the conductor or conductor bundle out of the fluidized-bed sintering tank by means of the lowering device as soon as a desired coating thickness is reached, and curing the internal corona-discharge protection by heating,
(S5) coating the conductor or conductor bundle with an insulating layer by lowering it by means of the lowering device into the fluidized-bed sintering tank holding a second coating powder, until a layer thickness of ≤ 0.2 mm is reached,
(S6) intermediate curing of the insulating layer of the conductor or conductor bundle by heating after the conductor or conductor bundle has been lifted out of the fluidized-bed sintering tank,
(S7) repeating coating steps S5 and S6 until a desired insulating-layer thickness comprising a plurality of insulating-layer films has been applied,
(S8) coating the conductor or conductor bundle with an external corona-discharge protection in accordance with steps S5 and S6, during which step the fluidized-bed sintering tank contains a third coating material, and
(S9) curing the entire insulation of the conductor or conductor bundle by heating.

2. Process according to Claim 1, in which the conductor or conductor bundle may, for example, be a conductor bar, a transposed bar or a coil.

3. Process according to Claim 1 or 2, comprising the further step (S0), before the coating of the conductor or conductor bundle starts, of internal adhesive bonding of the conductors or winding a tape around the conductors for prestrengthening.

4. Process according to Claim 3, in which, if a strip which includes a semiconducting or conductive layer is used for the winding operation in step (S0), at the same time forming an internal corona-discharge protection, the steps S3 and S4 for applying the internal corona-discharge protection are not required.

5. Process according to one of the preceding Claims 1 to 4, in which, in step (S2), the substrate is heated to approx. 20°C above the melting point of the coating powder.

6. Process according to one of the preceding Claims 1 to 5, in which, in step (S2), the heating takes place either in a furnace or by electrical heating of the conductor or conductor bundle.

7. Process according to Claim 6, in which, in step (S2), the electrical heating is effected by resistance heating using direct current or low frequency.

8. Process according to one of the preceding Claims 1 to 7, in which the first coating powder used is conductive or semiconducting thermally crosslinkable plastic, the second coating powder used is an insulating powder, and the third coating powder used is a conductive, thermally crosslinkable plastic.

9. Process according to Claim 8, in which an epoxy resin in the B state is used as conductive or semiconducting, thermally crosslinkable plastic.

10. Process according to one of the preceding Claims 1 to 9, in which, in step S3, the coating powder melts on the heated conductor or conductor bundle, and the layer thickness applied is controlled by means of the dwell time in the fluidized-bed sintering tank and the temperature of the workpiece.

11. Process according to Claim 10, in which the dwell time in the fluidized-bed sintering tank is controlled by means of a control device of a coating robot.

12. Process according to one of the preceding Claims 1 to 11, in which step (S6) comprises recording a surface temperature of the conductor or conductor bundle which is to be coated by means of a measuring device and readjusting the substrate temperature if the surface temperature recorded falls below the predetermined substrate temperature.

13. Process according to one of the preceding Claims 1 to 12, in which in step (S9) the heating is carried out either by means of a furnace or by means of electrical heating.

14. Process according to Claim 2, in which step (S1) comprises holding the bar at the bar ends or the coils at the coil eyelets.

15. Process according to Claim 2 or 14, comprising the further step (S10), in the case of a coil, of, after the coil has been fitted, positioning the motor stator vertically, electrically heating the coil and immersing the coil eyelets in the fluidized-bed sintering tank in order for them to be coated with epoxy, in each case for both sides of the coil, or
in the case of a bar, resistively heating the motor winding and insulating the end parts by spray-sintering for both ends of the bar.

16. Process according to one of Claims 1 to 15, comprising the further step of electrostatically charging the coating powder, so that increased amounts of material are applied to points and edges of the conductor or conductor bundle which is to be coated.

17. Process according to Claim 16, in which, in the step of electrostatically charging the coating powder, the electrostatic charging takes place by means of high-voltage electrodes provided at the fluidized-bed sintering tank.

## Revendications

1. Procédé pour réaliser une isolation de haute qualité de conducteurs ou de faisceaux de conducteurs de machines électriques rotatives, comprenant les étapes suivantes:
(S1) Montage d'un conducteur ou d'un faisceau de conducteurs à revêtir sur un dispositif d'immersion,
(S2) Préchauffage du conducteur ou du faisceau de conducteurs à une température de substrat prédéterminée,
(S3) Revêtement du conducteur ou du faisceau de conducteurs avec une protection au mica interne par immersion au moyen du dispositif d'immersion dans une cuve de revêtement en lit fluidisé avec une première poudre de revêtement jusqu'à atteindre une épaisseur de couche ≤ 0,2 mm,
(S4) Remontée du conducteur ou du faisceau de conducteurs hors de la cuve de revêtement en lit fluidisé au moyen du dispositif d'immersion dès qu'une épaisseur de couche désirée est atteinte, et durcissement de la protection au mica interne par chauffage,
(S5) Revêtement du conducteur ou du faisceau de conducteurs avec une couche isolante par immersion, au moyen du dispositif d'immersion, dans la cuve de revêtement en lit fluidisé avec une deuxième poudre de revêtement, jusqu'à atteindre une épaisseur de couche ≤ 0,2 mm,
(S6) Durcissement intermédiaire de la couche isolante du conducteur ou du faisceau de conducteurs par chauffage, après avoir remonté le conducteur ou le faisceau de conducteurs hors de la cuve de revêtement en lit fluidisé,
(S7) Répétition des étapes de revêtement (S5) et (S6), jusqu'à ce qu'une épaisseur de couche isolante désirée se composant de plusieurs couches individuelles soit déposée,
(S8) Revêtement du conducteur ou du faisceau de conducteurs avec une protection au mica externe comme lors des étapes (S5) et (S6), pour lequel une troisième matière de revêtement est contenue dans la cuve de revêtement en lit fluidisé, et
(S9) Durcissement de l'isolation totale du conducteur ou du faisceau de conducteurs par chauffage.

2. Procédé selon la revendication 1, dans lequel le conducteur ou le faisceau de conducteurs peut être une barre conductrice, une barre Roebel ou une bobine.

3. Procédé selon la revendication 1 ou 2, comprenant l'étape supplémentaire (S0) avant le commencement du revêtement du conducteur ou du faisceau de conducteurs, consistant à coller intérieurement les conducteurs ou à les envelopper avec une bande enroulée pour les fixer au préalable.

4. Procédé selon la revendication 3, dans lequel, lorsque l'on utilise à l'étape (S0) pour l'enroulement une bande avec une couche semi-conductrice ou conductrice, qui forme en même temps une protection au mica interne, les étapes (S3) et (S4) de dépôt de la protection au mica interne ne sont pas nécessaires.

5. Procédé selon l'une quelconque des revendications précédentes 1 à 4, dans lequel le substrat est chauffé, dans l'étape (S2), à environ 20°C au-dessus de la température de fusion de la poudre de revêtement.

6. Procédé selon l'une quelconque des revendications précédentes 1 à 5, dans lequel le chauffage, à l'étape (S2), est effectué soit dans un four soit par chauffage électrique du conducteur ou du faisceau de conducteurs.

7. Procédé selon la revendication 6, dans lequel le chauffage électrique, à l'étape (S2), est effectué par chauffage ohmique en utilisant une tension continue ou une basse fréquence.

8. Procédé selon l'une quelconque des revendications précédentes 1 à 7, dans lequel on utilise comme première poudre de revêtement une matière plastique conductrice ou semi-conductrice réticulable à chaud, comme deuxième poudre de revêtement une poudre isolante et comme troisième poudre de revêtement une matière plastique conductrice réticulable à chaud.

9. Procédé selon la revendication 8, dans lequel on utilise comme matière plastique conductrice ou semi-conductrice réticulable à chaud une résine époxy à l'état B.

10. Procédé selon l'une quelconque des revendications précédentes 1 à 9, dans lequel on effectue, à l'étape (S3), une fusion de la poudre de revêtement sur le conducteur ou le faisceau de conducteurs chauffé et l'épaisseur de couche déposée est réglée par la durée de séjour dans la cuve de revêtement en lit fluidisé et la température de la pièce.

11. Procédé selon la revendication 10, dans lequel la durée de séjour dans la cuve de revêtement en lit fluidisé est réglée au moyen d'un dispositif de commande d'un robot de revêtement.

12. Procédé selon l'une quelconque des revendications précédentes 1 à 11, dans lequel l'étape (S6) comprend une détection d'une température de surface du conducteur ou du faisceau de conducteurs à revêtir au moyen d'un dispositif de mesure et la température du substrat est réajustée lorsque la température de surface détectée descend en dessous de la température de substrat prédéterminée.

13. Procédé selon l'une quelconque des revendications précédentes 1 à 12, dans lequel le chauffage à l'étape (S9) est effectué soit au moyen d'un four soit au moyen d'un chauffage électrique.

14. Procédé selon la revendication 2, dans lequel l'étape (S1) comprend un accrochage de la barre aux extrémités de la barre ou des bobines aux yeux des bobines.

15. Procédé selon la revendication 2 ou 14, comprenant l'étape supplémentaire (S10) dans le cas d'une bobine après le montage de la bobine, de placement du stator du moteur en position verticale, chauffage électrique de la bobine et immersion des yeux de la bobine dans la cuve de revêtement en lit fluidisé pour revêtir d'époxy respectivement les deux extrémités de la bobine, ou dans le cas d'une barre, de chauffage par résistance de l'enroulement du moteur et isolation des parties d'extrémité par projection de revêtement sur les deux extrémités de la barre.

16. Procédé selon l'une quelconque des revendications 1 à 15, avec l'étape supplémentaire de chargement électrostatique de la poudre de revêtement, de telle façon qu'il se forme un dépôt de matière plus épais sur les pointes et les arêtes du conducteur ou du faisceau de conducteurs à revêtir.

17. Procédé selon la revendication 16, dans lequel, lors de l'étape de chargement électrostatique de la poudre de revêtement, on effectue le chargement électrostatique au moyen d'électrodes à haute tension prévues dans la cuve de revêtement en lit fluidisé.
